# EUROPEAN PATENT APPLICATION

(11) **EP 4 485 663 A1**
(43) Date of publication of application: **01.01.2025**
(21) Application number: 23924357.9
(22) Date of filing: 15.12.2023
(51) Int. Cl.: H01M 50/409, H01M 50/44, H01M 50/431, H01M 50/489

(54) **SEPARATOR, MANUFACTURING METHOD THEREOF, ELECTRODE ASSEMBLY COMPRISING SAME, MANUFACTURING METHOD THEREOF, AND LITHIUM SECONDARY BATTERY COMPRISING SAME**

(30) Priority: 24.02.2023 KR 20230025333; 11.12.2023 KR 20230179147
(71) Applicant: LG Energy Solution, Ltd., Seoul 07335 (KR)
(72) Inventor: JEONG, So-Mi, Daejeon 34122 (KR); LEE, Yong-Hyeok, Daejeon 34122 (KR); KIM, Kyung-Tae, Daejeon 34122 (KR); BAE, Dong-Hun, Daejeon 34122 (KR)
(74) Representative: Hoffmann Eitle
(86) International application number: PCT/KR2023/020830
(87) International publication number: WO 2024/177251

(57) **Abstract**

A separator for an electrode assembly of a battery includes a non-woven fabric base formed by mixing a first fiber with an average diameter of approximately 10 µm or more and a second fiber with an average diameter of approximately 1 µm or less; and inorganic particles positioned in pores formed between the first and second fibers of the non-woven fabric base. The first fiber has a melting point of about 150 °C or less, and the inorganic particles have D50 of about 400 nm or less.

## Description

### TECHNICAL FIELD

The present disclosure relates to a separator, a manufacturing method thereof, an electrode assembly including the same, a manufacturing method thereof, and a lithium secondary battery including the same.

This application is based on and claims priority from Korean Patent Application No. 10-2023-0025333, filed on February 24, 2023, and Korean Patent Application No. 10-2023-0179147, filed on December 11, 2023, with the Korean Intellectual Property Office, the disclosure of which is incorporated herein in its entirety by reference.

### BACKGROUND

In recent years, there has been a growing interest in energy storage technologies. As application areas expand to include mobile phones, camcorders, laptop PCs, and even electric vehicles, efforts to research and develop electrochemical devices are becoming more concrete. Electrochemical devices are one of the most prominent areas in this regard, and the development of secondary batteries, such as lithium secondary batteries that is capable of being charged and discharged, has become a focus of interest.

For the separator that makes up such a battery, its basic requirements are to separate the positive electrode and the negative electrode and electrically insulate them, while increasing the permeability of ions, such as lithium ions, based on high porosity, thereby increasing ionic conductivity. The commonly used base for the separator is a porous polyolefin film made of polyolefin-based materials such as polyethylene (PE) and polypropylene (PP), which are advantageous in forming pores and have excellent chemical resistance, mechanical properties, and thermal properties.

However, due to the material properties of the porous polyolefin film and the manufacturing process, especially including stretching, the separators may thermally shrink at high temperatures, causing internal short circuits and melting of the polymeric separator base during thermal runaway. Thus, the risk of ignition increases.

### SUMMARY

### Technical Problem

According to one aspect, the present disclosure provides a separator that has improved insulation and adhesion to electrodes while having a non-woven fabric base and inorganic particles filled to be located in the pores thereof.

According to another aspect, the present disclosure provides an electrode assembly including the disclosed separator and a method of manufacturing the same.

According to yet another aspect, the present disclosure provides a lithium secondary battery having an electrode assembly for use with the disclosed separator.

It will be readily apparent that the objects and advantages of the present disclosure may be realized by means or methods and combinations thereof described in the claims.

### Technical Solution

One aspect of the present disclosure provides a separator according to the following embodiments.

A first embodiment relates to a separator including: a non-woven fabric base formed by mixing a first fiber with an average diameter of approximately 10 µm or more and a second fiber with an average diameter of approximately 1 µm or less; and inorganic particles positioned in pores formed between the first and second fibers of the non-woven fabric base, in which the first fiber has a melting point of approximately 150 °C or less, and the inorganic particles have D50 of approximately 400 nm or less.

A second embodiment relates to the separator according to the first embodiment, in which a mixing weight ratio of the first fiber and the second fibers is approximately 1:9 to 9: 1.

A third embodiment relates to the separator according to the first or second embodiment, in which the first fiber has an average diameter of approximately 10 µm to 30 µm, and the second fiber has an average diameter of approximately 0.1 µm to 1 µm.

A fourth embodiment relates to the separator according to any one of the first to third embodiments, in which the D50 of the inorganic particles is approximately 30 nm to 400 nm.

A fifth embodiment relates to the separator according to any one of the first to fourth embodiments, in which the melting point of the first fiber is approximately 50 °C to 120 °C.

A sixth embodiment relates to the separator according to any one of the first to fifth embodiments, in which the first fiber is formed of one or more polymers selected from the group consisting of polyamide, polyester, thermoplastic polyurethane, and ethylene-vinyl acetate copolymer.

A seventh embodiment relates to the separator according to any one of the first to sixth embodiments, in which the second fiber has a melting point of approximately 200 °C or more.

An eighth embodiment relates to the separator according to any one of the first to seventh embodiments, in which the second fiber is formed from one or more polymers selected from the group consisting of polyethylene terephthalate, polyacetal, polyamide, polycarbonate, polyimide, polyether ether ketone, polyethersulfone, polyphenylene oxide, polyphenylene sulfide, and polyethylene naphthalene.

A ninth embodiment relates to the separator according to any one of the first to eighth embodiments, in which the separator has a thickness of approximately 10 µm to 30 µm.

A tenth embodiment relates to the separator according to any one of the first to ninth embodiments, in which the non-woven fabric base has a basis weight of approximately 5 g/m² to 30 g/m², and the inorganic particles has a basis weight of approximately 10 g/m² to 50 g/m².

An eleventh embodiment relates to the separator according to any one of the first to tenth embodiments, in which the separator has a permeability of approximately 1 s/100 cc to 300 s/100 cc.

A twelfth embodiment relates to the separator according to any one of the first to eleventh embodiments, in which the inorganic particles are coated with a binder polymer on at least a portion of surfaces thereof.

Another aspect of the present disclosure provides a method of preparing a separator of a lithium secondary battery according to the following embodiments.

A thirteen embodiment relates to a method of preparing a separator of a lithium secondary battery, the method including: forming a non-woven fabric base from a mixture of a first fiber and a second fiber having different predetermined diameter ranges; and providing inorganic particles in pores formed between the first fiber and the second fiber, in which an average diameter of the first fiber is adjusted to approximately 10 µm or more, and an average diameter of the second fiber is adjusted to approximately 1 µm or less, and the first fiber is a fiber having a melting point of approximately 150 °C or lower, and D50 of the inorganic particles is simultaneously controlled to approximately 400 nm or less.

A fourteenth embodiment relates to the method according to the thirteenth embodiment, in which the first fiber is formed of one or more polymers selected from the group consisting of polyamide, polyester, thermoplastic polyurethane, and ethylene-vinyl acetate copolymer.

A fifteenth embodiment relates to the method according to the thirteenth or fourteenth embodiment, in which the second fiber is a fiber having a melting point of approximately 200 °C or more.

A sixteenth embodiment relates to the method according to any one of the thirteenth to fifteenth embodiments, in which the second fiber is formed from one or more polymers selected from the group consisting of polyethylene terephthalate, polyacetal, polyamide, polycarbonate, polyimide, polyether ether ketone, polyethersulfone, polyphenylene oxide, polyphenylene sulfide, and polyethylene naphthalene.

Yet another aspect of the present disclosure provides a separator according to the following embodiments.

A seventeenth embodiment relates to an electrode assembly including: a positive electrode; a negative electrode; and the separator of any one of the first to twelfth embodiments disposed between the positive electrode and the negative electrode.

Still another aspect of the present disclosure provides a manufacturing method of an electrode assembly according to the following embodiments.

An eighteenth embodiment relates to a manufacturing method of an electrode assembly including: preparing the separator of any one of the first to twelfth embodiments; and interposing the separator between the positive electrode and the negative electrode, followed by heating and pressurization at a temperature range of approximately -80 °C to +30 °C based on the melting point of the first fiber.

Still yet another aspect of the present disclosure provides a lithium secondary battery according to the following embodiment.

A nineteenth embodiment relates to a lithium secondary battery including: the electrode assembly of the seventeenth embodiment.

### Advantageous Effects

According to the present disclosure, the non-woven fabric base is formed from a mixture of fibers having different predetermined diameter ranges, and the melting point of the fibers having a large diameter and the average particle diameter of the inorganic particles filled to be located in the pores of the non-woven fabric base are simultaneously controlled, so that adhesion and insulation to the electrode may be simultaneously secured.

Accordingly, when the separator of the present disclosure is bonded with the electrode, for example, through lamination or hot pressing process and assembled into an electrode structure, the hardness (robustness) of the battery cell is maintained even after electrolyte injection. This is because the electrode interface and the separator are strongly adhered, inhibiting the battery cell from bending and/or distorting.

The effects of each component of the present disclosure will be described in more detail below.

### DETAILED DESCRIPTION

Hereinafter, the present disclosure will be described in detail. In the following detailed description, reference is made to the accompanying drawings which form a part hereof. The illustrative embodiments described in the detailed description, drawings, and claims are not meant to be limiting. Other embodiments may be utilized, and other changes may be made without departing from the spirit or scope of the subject matter presented herein.

Throughout the specification, when a part is mentioned to "include" or "is provided with" a certain component, it means that this does not exclude other components, but includes or is further provided with other components, unless specifically stated to the contrary.

As used herein, the characteristic of having pores means that an object includes a plurality of pores and that gaseous and/or liquid fluid is able to pass from one side to the other side of the object due to a structure in which the pores are connected to each other.

As used herein, the words "about," "approximately," and "substantially" are used to mean a range or approximation of a numerical value or degree, taking into account inherent manufacturing and material tolerances, and are used to prevent infringers from taking unfair advantage of the disclosure where precise or absolute numbers are provided to aid in the understanding of the disclosure.

Generally, in order to increase a battery capacity, batteries are produced in a form of a stack of multiple unit cells, which overlap. For example, in a roll-to-roll process, a cell is manufactured by contacting a pre-manufactured separator with electrodes such as a positive electrode and a negative electrode, and this process is repeated to continuously produce batteries. Therefore, the adhesion between the separator and the electrode is an important factor in the continuous manufacturing process of cells, and thus, the disclosed separator has excellent adhesion to the electrode, when compared to conventional separators.

If the contact between the separator and the electrode is available, lithium secondary batteries may be manufactured by assembly processes such as lamination and heat pressing. In this case, there is an advantage in that the electrode interface and the separator are brought into close contact and the hardness of the battery cell is secured even under electrolyte injection. In particular, as the size of the battery cell increases, there is a risk that the alignment of the stacked separator and electrode may be misaligned when the electrode and separator are not bonded, and there is a problem of the cell being bent or distorted even after the cell is fabricated.

In the art, separators have been used in a form in which porous polyolefin is coated with an inorganic material to improve heat resistance, but it has disadvantages such as the polyolefin used as a base material being highly flammable, thereby increasing the risk of ignition.

The present disclosure discloses a separator that includes a non-woven fabric base made of heat-resistant fibers such as polyethylene terephthalate as a base material for the separator, and enhances heat resistance by filling inorganic particles in the pores formed between the fibers. This separator is a building-like structure made of reinforcing bars (corresponding to the fibers that make up non-woven fabric) as a basic framework and filled with concrete containing gravel or sand (corresponding to inorganic particles).

Such a non-woven fabric base has an advantage of a relatively simple manufacturing process and low manufacturing cost, but when the pores are too large, it may be difficult to secure sufficient insulation using only the inorganic particles located in the pores.

Meanwhile, since the separator of the present disclosure is assembled into an electrode structure by adhering to electrodes through lamination or hot press process, the electrode interface and the separator are in close contact to maintain the hardness such as structural integrity, e.g., shape and dimensions of the battery cell even after electrolyte injection. In particular, if the electrodes and separators are not in close contact, there is a risk that the arrangement of the stacked separator and electrode may be distorted as the size of the cell increases and the cell becomes larger and longer, and/or the cell may become bent or distorted even after the battery cell is manufactured. Therefore, the present disclosure ensures adhesion to the electrode even when the separator is filled with inorganic particles in the pores of the non-woven fabric base.

In the present specification, the separator has porous characteristics including a large number of pores, and serves as a porous ion-conducting barrier that allows ions to pass while blocking electrical contact between the negative electrode and the positive electrode in an electrochemical device.

As used herein, "non-woven fabric" refers to a fabric formed by interwinding fibers with each other, rather than a fabric woven from warp and weft yarns using a weaving machine or a knitted fabric using a knitting machine.

The present disclosure provides a separator including: a non-woven fabric base formed by mixing a first fiber with an average diameter of approximately 10 µm or more and a second fiber with an average diameter of approximately 1 µm or less; and inorganic particles positioned in pores formed between the first and second fibers of the non-woven fabric base, in which the first fiber has a melting point of approximately 150 °C or less, and the inorganic particles have D50 of approximately 400 nm or less.

### [Non-woven Fabric Base]

When a general non-woven fabric is coated with ceramics, the non-woven fabric has no adhesiveness, and thus, is unable to be introduced into the lamination process. However, since the non-woven fabric of the present disclosure has adhesiveness, it is possible to adhere the electrode and the separator to each other using a method such as hot melt without forming a separate adhesive layer.

The non-woven fabric base of the present disclosure is formed from a mixture of a first fiber and a second fiber having different average diameters.

The first fiber has an average diameter of approximately 10 µm or more. For example, the average diameter of the first fiber may be approximately 10 µm to 30 µm, or 10 µm to 20 µm, or approximately 12 µm to 17 µm.

The first fiber having such a large average diameter increases the surface roughness of the non-woven fabric, so that the first fiber is exposed in large amounts on the surface of the non-woven fabric base. This makes it easier to contact the electrode. It also facilitates the filling of the pores of the non-woven fabric base with inorganic particles.

When the average diameter of the first fiber is less than 10 µm, the surface roughness of the non-woven fabric is lowered, and the exposure ratio of the inorganic particles to the second fiber on the surface of the non-woven fabric increases. Accordingly, there is a problem that the exposure ratio of the first fiber on the surface of the non-woven fabric base is reduced.

The melting point of the first fiber is approximately 150 °C or less, for example, approximately 50 °C to 120 °C, or approximately 60 °C to 100 °C, or approximately 70 °C to 100 °C, or approximately 80 °C to 95 °C.

When the separator of the present disclosure is heated and pressed through a lamination or hot press process to adhere to an electrode, the first fiber having the above-described melting point range partially flows by, for example, melting, and adheres to the electrode interface. Accordingly, the separator is bonded to the electrode and adheres closely to each other, so that the hardness of the battery cell is maintained even after electrolyte injection, and the bending or distortion of the battery cell is suppressed. In addition, during thermal runaway of the battery, the first fiber may melt and provide the separator with a shutdown function that closes the pores.

When the melting point of the first fiber exceeds 150 °C, it is difficult for the first fiber to flow without affecting the electrode when heated for thermal bonding. Further, during the thermal runaway of the battery, the shutdown temperature of the separator becomes too high, making it difficult to suppress ignition of the battery.

The first fiber may be formed of one or more polymers selected from the group consisting of polyamide, polyester, thermoplastic polyurethane (TPU), and ethylene-vinyl acetate copolymer.

Examples of the polyamide include synthetic products prepared by reacting straight-chain diacids such as oxalic acid, malonic acid, succinic acid, glutaric acid, adipic acid, pimelic acid, suberic acid, azelaic acid, undecanedioic acid, dodecanedioic acid, brassylic acid, thapsic acid, japanic acid, phellogenic acid, or equisetolic acid; aromatic diacids such as phthalic acid, isophthalic acid, terephthalic acid, diphenic acid, or 2,6-naphthalenedicarboxylic acid; or lactams such as β-propiolactam, γ-butyrolactam, δ-valerolactam, or ε-caprolactam, with diamines such as methandiamine, ethylenediamine, 1,3-diaminopropane, putrescine, cadaverine, hexamethylenediamine, 1,2-diaminopropane, 1,4-diazacycloheptane, PPD (para-phenylenediamine), 1,4-diazacycloheptane, o-xylylenediamine, and m-xylylenediamine, p-xylylenediamine, o-phenylenediamine, m-phenylenediamine, p-phenylenediamine, dimethyl-4-phenylenediamine, 4,4'-diaminobiphenyl, or 1,8-diaminonaphthalene, or mixtures of two or more of these compounds.

Examples of the polyester include synthetic products prepared from terephthalic acid or isophthalic acid and 1,4-butadiene, where the melting point may be adjusted by adding a tackifier resin, plasticizing oil, or all of them, or mixtures of two or more of these compounds.

Examples of the ethylene-vinyl acetate copolymer include ethylene-vinyl acetate-based compounds containing vinyl acetate in an amount of approximately 18 parts by weight or more and less than 40 parts by weight, or mixtures of two or more thereof.

The second fiber is mixed with the first fiber to form a non-woven fabric base.

In this specification, the term "mixed" should be interpreted to include a state where the first fiber and the second fiber are homogeneously mixed, as well as a state in which the first fiber and the second fiber are heterogeneously mixed such that they are not separated from each other and formed into separate layers.

The second fiber has an average diameter of approximately 1 µm or less. For example, the average diameter of the first fiber may be approximately 0.1 µm to 1 µm, or approximately 0.5 µm to 1 µm, or approximately 0.6 µm to 0.8 µm. In this way, the second fiber, which has a smaller average diameter than the first fiber, contributes to securing the insulation of the separator by controlling the pore size and deviation of the non-woven fabric base to a small extent. Further, the second fiber suppresses a detachment phenomenon of inorganic particles located in the pores of the non-woven fabric base. Further, the second fiber suppresses the thickness of the non-woven fabric base from becoming too thick to secure insulation.

When the average diameter of the second fiber exceeds 1 µm, the above-described function of the second fiber may be deteriorated. In this aspect, the mixing weight ratio of the first fiber and the second fiber may be approximately 1:9 to 9: 1, for example, approximately 2:8 to 8:2, or approximately 3:7 to 7:3.

The second fiber may have a melting point of approximately 150 °C or less, like the first fiber. The second fiber, which has such a melting point range, further improves the adhesion of the separator to the electrode. Further, the shutdown function of the separator is further enhanced.

Meanwhile, the melting point of the second fiber may be approximately 200 °C or higher. When using the second fiber having such a high melting point, the shape of the separator is maintained by the second fiber even when the first fiber is completely melted due to thermal runaway of the battery, thereby improving heat resistance. The second fiber having a high melting point may be formed from one or more polymres selected from the group consisting of polyethylene terephthalate, polyacetal, polyamide, polycarbonate, polyimide, polyetheretherketone, polyethersulfone, polyphenyleneoxide, polyphenylenesulfide, and polyethylenenaphthalene, but is not limited thereto.

Considering the functions of the first fiber and the second fiber described above, the basis weight of the non-woven fabric base may be approximately 5 g/m² to 30 g/m², for example, approximately 8 g/m² to 25 g/m², but is not limited thereto.

### [Inorganic Particles]

The pores formed between the fibers of the non-woven fabric base are filled with inorganic particles. The inorganic particles contribute to preventing explosion of the battery by preventing direct contact between the positive electrode and the negative electrode even when the non-woven fabric base melts down during thermal runaway of the battery. The inorganic particles also contribute to improving the insulation of the separator.

The average particle diameter (D50) of the inorganic particles is approximately 400 nm or less. For example, D50 is approximately 30 nm to 400 nm, approximately 50 nm to 350 nm, approximately 65 nm to 300 nm, or approximately 70 nm to 290 nm.

In the specification, the term "D50" indicates a particle diameter at a point that is 50% of the particle volume cumulative distribution according to particle diameter. D50 may be measured using a laser diffraction method. For example, the powder to be measured is dispersed in a dispersion medium and then introduced into a commercially available laser diffraction particle diameter measuring device (e.g., Malvern MASTERSIZER 3000) to measure the difference in diffraction patterns depending on the particle diameter when the particles pass through the laser beam, thereby calculating the particle diameter distribution. D50 may be measured by calculating a particle diameter at a point that is 50% of the particle volume cumulative distribution according to particle diameter in the measuring device.

When D50 of the inorganic particles exceeds 400 nm, the insulation of the separator may decrease, and the rate of exposure to the surface of the separator may increase, thereby reducing the adhesive strength of the separator. In this respect, the basis weight of the inorganic particles in the separator may be approximately 10 g/m² to 50 g/m², for example, approximately 12 g/m² to 40 g/m², or approximately 15 g/m² to 30 g/m², but is not limited thereto.

The inorganic particles are not particularly limited as long as they are electrochemically stable. That is, the inorganic particles that may be used in the present disclosure are not particularly limited as long as they do not undergo oxidation and/or reduction reactions in the operating voltage range of the applied electrochemical device to which they are applied (e.g., 0 V to 5 V based on Li/Li⁺). In particular, the use of inorganic particles having a high permittivity may contribute to an increase in the dissociation of electrolyte salts, such as lithium salts, in the liquid electrolyte, thereby improving the ionic conductivity of the electrolyte.

For the reasons described above, the inorganic particles may include high-permittivity inorganic particles having a dielectric constant of approximately 5 or more, or approximately 10 or more. Non-limiting examples of the inorganic particles having a dielectric constant of 5 or more include any one inorganic particle selected from the group consisting of BaTiO₃, Pb(Zrₓ,Ti₁₋ₓ)O₃ (PZT, where 0<x<1), Pb₁₋ₓLaₓZr_{1-y}Ti_{y}O₃ (PLZT, where 0<x<1, 0<y<1), (1-x)Pb(Mg_{1/3}Nb_{2/3})O₃₋ₓPbTiO₃ (PMN-PT, where 0<x<1), hafnia (HfO₂), SrTiO₃, SnO₂, CeO₂, MgO, NiO, CaO, ZnO, ZrO₂, Y₂O₃, Al₂O₃, boehmite, Al(OH)₃, AlOOH, SiC, and TiO₂, or a mixture of two or more thereof.

Further, inorganic particles having a lithium ion transfer capacity, that is, inorganic particles that contain the element lithium but do not store lithium and have an ability to transfer lithium ions, may be used as the inorganic particles. Non-limiting examples of inorganic particles having a lithium ion transfer capability include lithium phosphate (Li₃PO₄), lithium titanate (LiₓTi_{y}(PO₄)₃, 0<x<2, 0<y<3), lithium aluminum titanate (LiₓAl_{y}Ti_{z}(PO₄)₃, 0<x<2, 0<y<1, 0<z<3), (LiAlTiP)ₓO_{y} series glasses (0<x<4, 0<y<13) such as 14Li₂O-9Al₂O₃-38TiO₂-39P₂O₅, lithium lanthanum titanate (LiₓLa_{y}TiO₃, 0<x<2, 0<y<3), lithium germanium thiophosphate (LiₓGe_{y}P_{z}S_{w}, 0<x<4, 0<y<1, 0<z<1, w<5) such as Li_{3.25}Ge_{0.25}P_{0.75}S₄, lithium nitride (LiₓN_{y}, 0<x<4, 0<y<2) such as Li₃N, SiS₂ series glasses (LiₓSi_{y}S_{z}, 0<x<3, 0<y<2, 0<z<4) such as Li₃PO₄-Li₂S-SiS₂, and P₂S₅ series glasses (LiₓP_{y}S_{z}, 0<x<3, 0<y<3, 0<z<7) such as LiI-Li₂S-P₂S₅, or a mixture of two or more thereof.

The inorganic particles may be coated with a binder polymer on at least a portion of their surfaces. The binder polymer coated on the surface allows the inorganic particles to adhere to the fibers of the non-woven fabric, thereby suppressing detachment phenomenon of the inorganic particles. Non-limiting examples of binders include polyvinylidene fluoride, polyvinylidene fluoride-co-hexafluoro propylene, polyvinylidene fluoride-co-trichloro ethylene, polyvinylidene fluoride-co-chlorotrifluoro ethylene, and polymethyl methacrylate, polyacrylonitrile, polyvinylpyrrolidone, polyvinylacetate, ethylene vinyl acetate copolymer (polyethylene-co-vinyl acetate), polyethylene oxide, cellulose acetate, cellulose acetate butyrate, cellulose acetate propionate, cyanoethylpullulan, cyanoethylpolyvinylalcohol, cyanoethylcellulose, cyanoethylsucrose, pullulan, carboxyl methyl cellulose, acrylonitrile-styrene-butadiene copolymer, polyimide, or a mixture of two or more thereof.

The inorganic particles may be positioned in substantially contact with each other, except when the first fiber or the second fiber is interposed therebetween. In this case, when a coating layer of the binder polymer is formed on the surface of the inorganic particles, the binder polymer may connect and fix the inorganic particles so that the inorganic particles remain bound to each other.

Therefore, according to an embodiment of the present disclosure, a method of preparing a separator of a lithium secondary battery, includes forming a non-woven fabric base from a mixture of a first fiber and a second fiber having different predetermined diameter ranges; and providing inorganic particles in pores formed between the first fiber and the second fiber. An average diameter of the first fiber is adjusted to approximately 10 µm or more, and an average diameter of the second fiber is adjusted to approximately 1 µm or less, and the first fiber is a fiber having a melting point of approximately 150 °C or lower, and D50 of the inorganic particles is simultaneously controlled to about 400 nm or less.

### [Separator]

The permeability of the separator provided with the above-described non-woven fabric base and inorganic particles may be approximately 1 s/100 cc to 300 s/100 cc, for example, approximately 100 s/100 cc to 300 s/100 cc, approximately 140 s/100 cc to 300 s/100 cc, or approximately 150 s/100 cc to 290 s/100 cc.

In this specification, the term "permeability" refers to the time for 100 cc of air to pass through an object to be measured for permeability such as a separator, and the unit may be second/100 cc. The permeability may be used interchangeably with transmittance, and is usually expressed as a Gurely value. In a specific embodiment of the present disclosure, the permeability is measured in accordance with JIS P8117.

Further, the thickness of the separator may be approximately 10 µm to 30 µm, for example, approximately 15 µm to 30 µm, or approximately 20 µm to 25 µm, but is not limited thereto.

### [Electrode Assembly]

An electrode assembly is formed with a positive electrode, a negative electrode, and the separator interposed between the positive electrode and negative electrode.

In the following, the configuration of the electrode assembly and the manufacturing method of the above-described separator will be described in more detail.

The positive electrode includes a positive electrode collector and a positive electrode active material layer formed on the positive electrode collector.

In the positive electrode, the positive electrode collector is not particularly limited as long as it is conductive without causing chemical changes in the battery, and examples thereof include stainless steel, aluminum, nickel, titanium, calcined carbon, or aluminum or stainless steel subjected to surface treatment with carbon, nickel, titanium, or silver. Further, the positive electrode collector may have a thickness of about 3 µm to 500 µm, and fine irregularities may be formed on the surface of the positive electrode collector to increase the adhesion of the positive electrode active material. For example, the positive electrode collector may be used in various forms, such as a film, a sheet, a foil, a net, a porous body, a foam, and a non-woven body.

The positive electrode active material layer may include well-known positive electrode active material, conductive material, and binder.

The positive electrode active material includes layered compounds such as lithium cobalt oxide (LiCoO₂) and lithium nickel oxide (LiNiO₂) or compounds substituted with one or more transition metal elements; lithium manganese oxides such as Li₁₊ₓMn₂₋ₓO₄ (where x is 0 to 0.33), LiMnO₃, LiMn₂O₃, and LiMnO₂; lithium copper oxide (Li₂CuO₂); vanadium oxides such as LiVsOs, V₂O₅, and Cu₂V₂O₇; Ni site type lithium nickel oxides represented by the formula LiNi₁₋ₓMₓO₂ (where M is Co, Mn, Al, Cu, Fe, Mg, B, or Ga and x is 0.01 to 0.3); lithium manganese complex oxides represented by the formula LiMn₂₋ₓMₓO₂ (where M is Co, Ni, Fe, Cr, Zn, or Ta, and x is 0.01 to 0.1) or Li₂Mn₃MO₈ (where M is Fe, Co, Ni, Cu, or Zn); LiMn₂O₄ in which some of Li in the formula is replaced with an alkaline earth metal ion; disulfide compounds; Fe₂(MoO₄)₃, but is not limited thereto.

The conductive material is used to impart conductivity to the electrode, and may be used without particular limitations as long as it has electronic conductivity without causing chemical changes in the battery to be constructed. Examples thereof include graphite such as natural or artificial graphite; carbon-based materials such as carbon black, acetylene black, Ketjen black, channel black, furnace black, lamp black, summer black, and carbon fiber; metal powders or metal fibers such as copper, nickel, aluminum, and silver; conductive whiskers such as zinc oxide and potassium titanate; conductive metal oxides such as titanium oxide; and conductive polymers such as polyphenylene derivatives. These may be used alone or in a mixture of two or more thereof. The conductive material may typically be included in an amount of approximately 1% by weight to 30% by weight based on the total weight of the positive electrode active material layer.

The binder serves to enhance the adhesion between the positive electrode active material particles and the adhesion between the positive electrode active material and the positive electrode collector. Specific examples thereof include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, and regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluorinated rubber, or various copolymers thereof. These may be used alone or a mixture of two or more thereof. The binder may be included in an amount of approximately 1% by weight to 30% by weight based on the total weight of the positive electrode active material layer.

The positive electrode may be manufactured according to a conventional positive electrode manufacturing method. For example, the positive electrode may be manufactured by applying a composition for forming the positive electrode active material layer, on the positive electrode collector, followed by drying and rolling. The composition contains, for example, a positive electrode active material and optionally a binder and a conductive material. At this time, the type and content of the positive electrode active material, binder, and conductive material are as described above.

The solvent may be a solvent commonly used in the art, such as dimethyl sulfoxide (DMSO), isopropyl alcohol, N-methylpyrrolidone (NMP), acetone, or water, which may be used alone or a mixture of two or more. The amount of solvent used is sufficient to dissolve or disperse the positive electrode active material, the conductive material, and the binder in consideration of the application thickness of the slurry and the manufacturing yield, and to provide a viscosity capable of exhibiting good thickness uniformity upon subsequent application for positive electrode production.

Alternatively, the positive electrode may be manufactured by casting the composition for forming the positive electrode active material layer on a separate support and then laminating the film obtained by peeling from the support on the positive electrode collector.

The negative electrode includes a negative electrode collector and a negative electrode active material layer located on the negative electrode collector.

The negative electrode collector is, for example, a material of a high conductivity, which does not cause chemical changes in the battery, and examples thereof include copper, stainless steel, aluminum, nickel, titanium, calcined carbon, copper, or stainless steel subjected to surface treatment with carbon, nickel, titanium, or silver, and aluminum-cadmium alloys. Further, the negative electrode collector may have a thickness of approximately 3 µm to 500 µm, and like the positive electrode collector, fine irregularities may be formed on the surface of the negative collector to strengthen the bonding force of the negative electrode active material. For example, the negative electrode collector may be used in various forms, such as a film, a sheet, a foil, a net, a porous body, a foam, and a non-woven body.

The negative electrode active material layer optionally includes a binder and a conductive material along with the negative electrode active material. The negative electrode active material layer may be prepared, for example, by applying a composition for forming the negative electrode active material layer, which contains a negative electrode active material and optionally a binder and a coating material, on the negative electrode collector and drying the composition for forming the negative electrode active material layer, or by casting the negative electrode forming composition onto a separate support and then laminating the film obtained by peeling off the support onto the negative electrode collector.

The negative electrode active material may be any compound capable of reversible intercalation and deintercalation of lithium. Examples thereof include carbon-based materials such as artificial graphite, natural graphite, graphitized carbon fiber, and amorphous carbon; metallic compounds capable of being alloyed with lithium, such as Si, Al, Sn, Pb, Zn, Bi, In, Mg, Ga, Cd, Si alloys, Sn alloys, or Al alloys; metal oxides capable of doping and de-doping lithium, such as SiO_{β} (0<β<2), SnO₂, vanadium oxide, lithium vanadium oxide; or composites containing the above metallic compounds and carbon-based materials, such as Si-C composites or Sn-C composites, and these may be used alone or in a mixture of two or more thereof. Further, a metallic lithium thin film may be used as the negative electrode active material. In addition, both low-crystalline carbon and high-crystalline carbon may be used as carbon materials. Representative examples of the low-crystalline carbon include soft carbon and hard carbon, and representative examples of the high-crystalline carbon include amorphous, plate, in-plane, spherical, or fibrous natural or artificial graphite, Kish graphite, pyrolytic carbon, mesophase pitch based carbon fiber, meso-carbon microbeads, mesophase pitches, and high temperature calcined carbon such as petroleum or coal tar pitch derived cokes.

The binder and the conductive material may be the same as those previously described for the positive electrode.

The separator may be manufactured by immersing a non-woven fabric base formed by mixing the first and second fibers having different average diameters as described above, in a slurry containing inorganic particles, or by applying such a slurry to the non-woven fabric base, followed by drying.

The non-woven fabric base is, for example, formed by mixing the first and second fibers having different average diameters, and may be manufactured by spinning the first and second fibers through a spinning confinement in which a nozzle for spinning the first fiber and a nozzle for spinning the second fiber are arranged to intersect. The non-woven fabric base may be a spunbonded non-woven fabric manufactured using a spunbond facility or a melt-blown non-woven fabric manufactured using a melt-blown facility, but is not limited thereto.

The slurry containing inorganic particles may be prepared by dispersing the inorganic particles in an aqueous dispersion medium such as water, or an oil-based dispersion medium such as acetone, and further dispersing a particulate binder polymer in the dispersion medium, or further dissolving a binder polymer that are soluble in the dispersion medium, if necessary. When an additional binder polymer is added, the binder polymer forms a coating layer on the surface of the inorganic particles.

According to the manufacturing method of the electrode assembly according to one aspect of the present disclosure, the electrode assembly may be manufactured by interposing the separator prepared by the above-described method between the positive electrode and the negative electrode, followed by heating and pressurization. At this time, the appropriate heating temperature may vary depending on the glass transition temperature (Tg) and melting point (Tm) of the first fiber, which may be a temperature of -80 °C to +30 °C, particularly a temperature of -50 °C to +10 °C, more particularly a temperature of -30°C to +10 °C, and most particularly a temperature of 0 °C to +10 °C, based on the melting point of said first fiber.

That is, when the separator of the present disclosure is heated and pressurized to the above-described temperature range through a lamination or hot press process, a portion of the first fiber of the separator flow and adhere to the electrode, thereby ensuring good adhesion between the electrode interface and the separator, maintaining the hardness of the battery cell even after electrolyte injection, and suppressing the shape of the battery cell from being bent or distorted.

Meanwhile, the lithium secondary battery according to one aspect of the present disclosure includes the electrode structure as described above.

The lithium secondary battery includes the electrode structure and electrolyte described above. Examples of the electrolyte used in the present disclosure include an organic liquid electrolyte, an inorganic liquid electrolyte, a solid polymer electrolyte, a gel-type polymer electrolyte, a solid inorganic electrolyte, and a molten inorganic electrolyte that may be used in the production of a lithium secondary battery, but is not limited thereto.

For example, the electrolyte may contain an organic solvent and a lithium salt.

The organic solvent may be used without particular limitations as long as it can serve as a medium for ions involved in the electrochemical reaction of the battery to migrate. Examples of the organic solvent include ester-based solvents such as methyl acetate, ethyl acetate, γ-butyrolactone, and ε-caprolactone; ether-based solvents such as dibutyl ether and tetrahydrofuran; ketone-based solvents such as cyclohexanone; aromatic hydrocarbon-based solvents such as benzene and fluorobenzene; carbonate-based solvents such as dimethylcarbonate (DMC), diethylcarbonate (DEC), methylethylcarbonate (MEC), ethylmethylcarbonate (EMC), ethylene carbonate (EC), and propylene carbonate (PC); alcohol-based solvents such as ethyl alcohol and isopropyl alcohol; nitriles such as R-CN (where R is a straight, branched, or cyclic hydrocarbon group having 2 to 20 carbon atoms, which may include a double bonded aromatic ring or ether bond); amides such as dimethylformamide; dioxolanes such as 1,3-dioxolane; and sulfolanes. Among these, the carbonate-based solvents may be used, and a mixture of a cyclic carbonate (e.g., ethylene carbonate or propylene carbonate) having a high ionic conductivity and high dielectric constant that may increase the charge and discharge performance of the battery and a linear carbonate-based compound (e.g., ethyl methyl carbonate, dimethyl carbonate, or diethyl carbonate) having a low viscosity may also be used. In this case, excellent electrolyte performance may be obtained by mixing cyclic carbonate and chained carbonate in a volume ratio of about 1:1 to about 1:9.

The lithium salt may be any compound capable of providing lithium ions used in the lithium secondary battery, without particular limitations. Examples of the lithium salt include LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, and LiN(CF₃SO₂)₂, LiCl, LiI, and LiB(C₂O₄)₂. The concentration of the lithium salt may be used within the range of about 0.1 M to 2.0 M. When the concentration of lithium salt is within the above range, the electrolyte has appropriate conductivity and viscosity, which may exhibit good electrolyte performance, and the lithium ions may be effectively transported.

In addition to the above electrolyte components, the electrolyte may further contain one or more additives, for example, haloalkylene carbonate-based compounds such as difluoroethylene carbonate, pyridine, triethyl phosphite, triethanolamine, cyclic ether, ethylenediamine, N-glyme, hexane triamide, nitrobenzene derivatives, sulfur, quinone imine dyes, N-substituted oxazolidinones, N,N-substituted imidazolidines, ethylene glycol dialkyl ether, ammonium salts, pyrrole, 2-methoxyethanol, or aluminum trichloride, for the purpose of improving the life characteristics of the battery, inhibiting the reduction of the battery capacity, and improving the discharge capacity of the battery. In this case, the additive may be contained in an amount of approximately 0.1 to 5% by weight based on the total weight of the electrolyte.

The lithium secondary battery, or battery, according to the present disclosure is useful in the field of portable devices such as mobile phones, laptop computers, and digital cameras, and electric vehicles such as hybrid electric vehicles (HEV).

Hereinafter, embodiments of the present disclosure will be described in detail such that those skilled in the art can easily implement it. However, the present disclosure may be implemented in many different forms and is not limited to the embodiments described herein.

### Example 1

First, a high-porosity mixed non-woven fabric of a first fiber having a melting point of 150 °C or lower and a second fiber having a melting point of 200 °C or higher was prepared. The non-woven fabric is spun simultaneously using different nozzles so that the first fiber and the second fiber exist separately. The first fiber having a low melting point melts and serves to bond the electrode and the separator, while the second fiber having a high melting point does not melt at high temperatures and serves as a support.

In this Example, the first fiber and the second fiber were melt-spun through a spinneret in which spinning nozzles had different diameters and were arranged to intersect, thereby preparing a melt-blown non-woven fabric base (porosity 62%) formed by mixing a first fiber having an average diameter of 12 µm of a polyester (Chemtexa D1531E) polymer and a melting point of 80 °C and a second fiber having an average diameter of 0.7 µm of a polyethylene terephthalate polymer and a melting point of 260 °C. In the prepared non-woven fabric base, the mixing weight ratio of the first fiber and the second fiber was 5:5, and the basis weight of the non-woven fabric base was 10.7 g/m².

Next, a slurry for coating was prepared. Since the inorganic particles alone cannot exist in a bound state within the non-woven fabric, a polymer binder was added to the slurry such that the inorganic particles were kept in a bound state in the non-woven fabric. In the case of the slurry for coating, the binder and inorganic particles were added to a solvent and shaken vigorously using, for example, a shaker to ensure that the inorganic particles and the binder were uniformly dispersed in the solution.

In this example, 20 g of AlOOH (Nabaltec, D50 290 nm), 0.74 g of polyacrylic acid dispersant solution (solid content 42%), and 20 g of 0.5 mm beads for dispersion were added to 31.1 g of a 95:5 mixture of water and ethanol, and stirred with a paint shaker for 2 hours to prepare an inorganic particle dispersion. Then, 1.04 g of acrylic polymer (CSB130, Toyoink, Inc.) dispersed in water at 40% by weight as a binder component was added to the inorganic particle dispersion and shaken to prepare a coating slurry.

Next, the slurry thus prepared was impregnated into the non-woven fabric base prepared by the above-described method using a dipping method and then dried to prepare a separator. For this purpose, the coating slurry was placed in a container large enough to sufficiently immerse the non-woven fabric, thereby impregnating the non-woven fabric. A separator in which the pores of the non-woven fabric were filled with the inorganic particles and the binder was prepared through an immersion process in which the non-woven fabric was immersed in and then removed from a container containing a coating slurry.

The thickness of the prepared separator was 21.2 µm, the basis weight of the inorganic particles in the separator was 25.3 g/m², and the permeability of the separator was 159 s/100 cc.

### Examples 2 to 7

Separators were prepared as in Example 1, except that the polymer type of the first and second fibers and their melting points, the average diameter, the mixing weight ratio of the first and second fibers, the porosity and basis weight of the non-woven fabric base, the thickness of the separator, the basis weight of the inorganic particles, and the permeability were varied according to Table 1.

### Comparative Examples 1 to 7

Separators were prepared as in Example 1, except that the polymer type of the first and second fibers and their melting points, the average diameter, the mixing weight ratio of the first and second fibers, the porosity and basis weight of the non-woven fabric base, the thickness of the separator, the basis weight of the inorganic particles, and the permeability were varied according to Table 1.

### <Average Diameter of Fiber>

In this specification, the average diameter of the fiber was defined as measured as follows.

The non-woven fabric specimen was fixed to the mount for SEM measurement using carbon tape. Then, the surface was Pt-coated using an ion sputter for 60 seconds. The Pt-coated sample was measured under 10 kV conditions using FE-SEM (Hitachi S-4800) equipment. Using software, the diameter of one fiber strand was measured at more than 10 points in the x500 image observed with FE-SEM, and the fiber diameter was calculated by averaging the measured values.

### <Measurement of Melting Point of Fiber>

In this specification, the melting point of the fiber is defined as measured as follows.

The "melting point" of the first and second fibers constituting the non-woven fabric was measured by differential scanning calorimetry (DSC) as a temperature at which a peak appears due to endothermic absorption at a certain temperature when the temperature is increased from -30°C to 200°C at a constant rate of 10°C/min.

### <Measurement of D50 of Inorganic Particles>

In this specification, D50 of the inorganic particles is defined as measured using a laser diffraction particle size measurement device.

For example, the D50 of the inorganic particles was measured using a Malvern MASTERSIZER 3000 laser diffraction particle size measurement device.

### <Basis Weight of Non-woven Fabric and Inorganic Particles>

In this specification, the basis weight of the non-woven fabric and the inorganic particles is defined as measured as follows.

The basis weight of the non-woven fabric was measured per 1 m² of the prepared non-woven fabric, and the basis weight of the inorganic particles in the separator was obtained by measuring the basis weight of the separator and then subtracting the basis weight of the non-woven fabric used.

### <Permeability of Separator>

In this specification, the permeability of the separator is defined as measured as follows.

The permeability of the separator was measured in accordance with JIS P8117.

### <Evaluation of Adhesion and Insulation of Separator>

### Evaluation of Adhesion

A negative electrode slurry was prepared by mixing natural graphite, carbon black, carboxymethyl cellulose (CMC), and styrene-butadiene rubber (SBR) with water in a weight ratio of 96: 1:2:2. The negative electrode slurry was coated on copper foil (Cu-foil) at a capacity of 3.55 mAh/g to form a thin electrode plate, dried at 135 °C for 3 hours or more, and then pressed to prepare a negative electrode.

The prepared negative electrode was cut into a size of 25 mm x 100 mm. The separators prepared in Examples and Comparative Examples were cut into a size of 25 mm x 100 mm. Each of the separators and the negative electrode were overlapped and sandwiched between 100 µm PET films, and then bonded using a flat press. At this time, the conditions of the flat press machine were heating and pressurizing at 70 °C and a pressure of 600 kgf for 20 seconds. The bonded separator and negative electrode were attached to a glass slide using double-sided tape. The end of the adhesive side of the separator (10 mm or less from the end of the adhesive side) was peeled off and attached in the longitudinal direction using a 25 mm x 100 mm PET film and single-sided adhesive tape. After that, the slide glass was mounted on the lower holder of the UTM equipment (LLOYD Instrument LF Plus), and then the PET film attached to the separator was installed on the upper holder of the UTM equipment. Then, the force required to peel off the negative electrode and the porous coating layer opposite the negative electrode was measured by applying a force at 180° at a measurement speed of 300 mm/min.

### Evaluation of Insulation Breakdown Voltage

The separator samples prepared in Examples and Comparative Examples were placed between aluminum jigs (upper jig diameter 30mm, lower jig 50x100 mm), and the voltage at which a short circuit occurs was measured using a Hi-pot tester. At this time, the measurement conditions were set to DC, current of 0.5 mA, and voltage boost of 100 V/s (up to 3kV).

**Table 1**

| | First fiber | | | | Second fiber | | | |
|---|---|---|---|---|---|---|---|---|
| | Polymer | M.P. (°C) | Average diameter (µm) | Content in non-woven fabric base (% by weight) | Polymer | M.P. (°C) | Average diameter (µm) | Content in non-woven fabric base (% by weight) |
| Example 1 | Polyester | 80 | 12 | 50 | PET | 260 | 0.7 | 50 |
| Example 2 | Polyester | 80 | 12 | 50 | PET | 260 | 0.7 | 50 |
| Example 3 | Polyester | 80 | 12 | 50 | PET | 260 | 0.7 | 50 |
| Example 4 | Polyester | 80 | 12 | 30 | PET | 260 | 0.7 | 70 |
| Example 5 | Polyester | 80 | 12 | 70 | PET | 260 | 0.7 | 30 |
| Example 6 | Polyester | 80 | 17 | 50 | PET | 260 | 0.7 | 50 |
| Example 7 | TPU (Chemitech, AM100) | 95 | 15 | 50 | PET | 260 | 0.7 | 50 |
| Comparative Example 1 | Polyester | 80 | 12 | 100 | - | - | - | 0 |
| Comparative Example 2 | - | - | - | 0 | PET | 260 | 0.7 | 100 |
| Comparative Example 3 | Polyester | 80 | 0.7 | 100 | - | - | - | 0 |
| Comparative Example 4 | Polyester | 80 | 12 | 50 | PET | 260 | 0.7 | 50 |
| Comparative Example 5 | Polyester | 80 | 6 | 50 | PET | 260 | 0.7 | 50 |
| Comparative Example 6 | Polyester | 80 | 12 | 50 | PET | 260 | 2 | 50 |
| Comparative Exemple 7 | PP (KPIC, S800) | 160 | 13 | 50 | PET | 260 | 0.7 | 50 |

**Table 2**

| | Inorganic particles | | Nonwoven fabric base | Separator | | | | Evaluation of adhesion and insulation | |
|---|---|---|---|---|---|---|---|---|---|
| | D50 (nm) | Basis weight (g/m²) | Thickness 1 Permeability (µm)/(%) | Thickness (µm) | Basis weight of nonwoven fabric (g/m²) | Nonwoven fabric + inorganic particles (g/m²) | Permeability (s/100 cc) | Adhesion (gf/25 nm) | Insulation breakdown voltage (V) |
| Example 1 | 290 | 25.3 | 20.5/62 | 21.2 | 10.7 | 36 | 159 | 53 | 1125 |
| Example 2 | 290 | 16.2 | 20.5/40 | 22 | 16.9 | 33.1 | 248 | 68 | 1258 |
| Example 3 | 70 | 17.5 | 20.5/40 | 21.8 | 16.6 | 34.1 | 278 | 72 | 1375 |
| Example 4 | 290 | 15.9 | 19.2/41 | 21.4 | 15.3 | 31.2 | 216 | 49 | 1288 |
| Example 5 | 290 | 16.8 | 20.9/40 | 21.5 | 16.1 | 32.9 | 269 | 75 | 1154 |
| Example 6 | 290 | 25.3 | 20.8/39 | 22.1 | 16.7 | 42 | 281 | 89 | 1172 |
| Example 7 | 290 | 16.5 | 21.4/40 | 21.9 | 16.6 | 33.1 | 258 | 54 | 1251 |
| Comparative Example 1 | 290 | 23.6 | 32/39 | 32.9 | 25.7 | 49.3 | 310 | 88 | 994 |
| Comparative Example 2 | 290 | 17.1 | 19.3/42 | 20.1 | 15.3 | 32.4 | 206 | 0 | 1278 |
| Comparative Example 3 | 290 | 15.2 | 20.1/38 | 21.7 | 17.0 | 32.2 | 222 | 7 | 1251 |
| Comparative Example 4 | 500 | 15.6 | 20.5/40 | 23.2 | 16.8 | 32.4 | 201 | 42 | 762 |
| Comparative Example 5 | 290 | 16.5 | 21.5/38 | 22.2 | 18.2 | 34.7 | 234 | 16 | 1274 |
| Comparative Example 6 | 290 | 17.0 | 19.8/42 | 21.2 | 15.7 | 32.7 | 248 | 48 | 942 |
| Comparative Example 7 | 290 | 15.3 | 20.4/38 | 22.9 | 13.9 | 29.2 | 199 | 0 | 1394 |

As shown in Tables 1 and 2, Comparative Example 1, which used a non-woven fabric made of only the first fiber, had poor insulation and difficulty in controlling the thickness.

Comparative Example 2, which used a non-woven fabric made of only the second fiber, Comparative Examples 3 and 5, which used small-diameter fibers as the first fiber, and Comparative Example 7, which used polypropylene (PP) fibers with a high melting point as the first fiber, had low adhesion.

Comparative Example 4, which used inorganic particles having a large D50 as the inorganic particles, and Comparative Example 6, which used large-diameter fibers as the second fiber, had poor insulation properties.

## Claims

1. A separator comprising:
a non-woven fabric base formed by mixing a first fiber with an average diameter of approximately 10 µm or more and a second fiber with an average diameter of approximately 1 µm or less; and
inorganic particles positioned in pores formed between the first and second fibers of the non-woven fabric base,
wherein the first fiber has a melting point of about 150 °C or less, and the inorganic particles have D50 of approximately 400 nm or less.

2. The separator according to claim 1, wherein a mixing weight ratio of the first fiber and the second fibers is approximately 1:9 to 9: 1.

3. The separator according to claim 1, wherein the first fiber has an average diameter of approximately 10 µm to 30 µm, and the second fiber has an average diameter of approximately 0.1 µm to 1 µm.

4. The separator according to claim 1, wherein D50 of the inorganic particles is approximately 30 nm to 400 nm.

5. The separator according to claim 1, wherein the melting point of the first fiber is about 50 °C to 120 °C.

6. The separator according to claim 1, wherein the first fiber is formed of one or more polymers selected from the group consisting of polyamide, polyester, thermoplastic polyurethane, and ethylene-vinyl acetate copolymer.

7. The separator according to claim 1, wherein the second fiber has a melting point of about 200 °C or more.

8. The separator according to claim 7, wherein the second fiber is formed from one or more polymers selected from the group consisting of polyethylene terephthalate, polyacetal, polyamide, polycarbonate, polyimide, polyether ether ketone, polyethersulfone, polyphenylene oxide, polyphenylene sulfide, and polyethylene naphthalene.

9. The separator according to claim 1, wherein the separator has a thickness of approximately 10 µm to 30 µm.

10. The separator according to claim 1, wherein the non-woven fabric base has a basis weight of approximately 5 g/m² to 30 g/m², and the inorganic particles has a basis weight of approximately 10 g/m² to 50 g/m².

11. The separator according to claim 1, wherein the separator has a permeability of approximately 1 s/100 cc to 300 s/100 cc.

12. The separator according to claim 1, wherein the inorganic particles are coated with a binder polymer on at least a portion of surfaces thereof.

13. A method of preparing a separator of a lithium secondary battery, the method comprising:
forming a non-woven fabric base from a mixture of a first fiber and a second fiber having different predetermined diameter ranges; and
providing inorganic particles in pores formed between the first fiber and the second fiber,
wherein an average diameter of the first fiber is adjusted to approximately 10 µm or more, and an average diameter of the second fiber is adjusted to approximately 1 µm or less, and
a melting point of the first fiber and D50 of the inorganic particles are simultaneously controlled to be approximately 150 °C or lower and approximately 400 nm or less, respectively.

14. The method according to claim 13, wherein the first fiber is formed of one or more polymers selected from the group consisting of polyamide, polyester, thermoplastic polyurethane, and ethylene-vinyl acetate copolymer.

15. The method according to claim 14, wherein the second fiber is a fiber having a melting point of about 200 °C or more.

16. The method according to claim 15, wherein the second fiber is formed from one or more polymers selected from the group consisting of polyethylene terephthalate, polyacetal, polyamide, polycarbonate, polyimide, polyether ether ketone, polyethersulfone, polyphenylene oxide, polyphenylene sulfide, and polyethylene naphthalene.

17. An electrode assembly comprising:
a positive electrode;
a negative electrode; and
the separator according to any one of claims 1-12 disposed between the positive electrode and the negative electrode.

18. A method of manufacturing an electrode assembly, the method comprising:
preparing the separator according to any one of claims 1-12; and
interposing the separator between the positive electrode and the negative electrode, followed by heating and pressurization at a temperature range of from -80 °C to +30 °C based on the melting point of the first fiber.

19. A lithium secondary battery comprising the electrode assembly of claim 17.
